# EUROPÄISCHE PATENTANMELDUNG

(11) **EP 2 320 104 A2**
(43) Veröffentlichungstag der Anmeldung: **11.05.2011**
(21) Anmeldenummer: 10189161.2
(22) Anmeldetag: 28.10.2010
(51) Int. Cl.: F16D 7/04

(54) **Drehmomentkupplung**

(30) Priorität: 06.11.2009 DE 102009046477
(71) Anmelder: HILTI Aktiengesellschaft, 9494 Schaan (LI)
(72) Erfinder: Ludwig, Manfred, 86899, Landsberg (DE); Manschitz, Erwin, 82110, Germering (DE); Mössnang, Franz, 86899, Landsberg (DE); Kaibach, Werner, 86916, Kaufering (DE); Stroissnigg, Horst, 86932, Pürgen (DE); Schallert, Manfred, 6710, Nenzing (AT)

(57) **Zusammenfassung**

Die Drehmomentkupplung hat eine Welle, eine Hohlwelle und mehrere Blattfedern mit einem vorderen, mittleren und hinteren Abschnitt. Der mittlere Abschnitt ist drehfest an der Welle angelegt, der vordere Abschnitt radial gegen die Hohlwelle vorgespannt und der hintere Abschnitt einer der Blattfedern ist entgegen einer relativen Drehrichtung der Hohlwelle gegen einen vorderen Abschnitt der einen der Blattfedern benachbarten Blattfeder vorgespannt.

## Beschreibung

### GEBIET DER ERFINDUNG

Die vorliegende Erfindung betrifft eine Drehmomentkupplung, wie sie zum Beispiel aus der US 6,200,220 B bekannt ist.

### OFFENBARUNG DER ERFINDUNG

Die erfindungsgemäße Drehmomentkupplung hat nach einem Aspekt eine Welle, eine Hohlwelle und mehrere Blattfedern mit einem vorderen, mittleren und hinteren Abschnitt. Der mittlere Abschnitt ist drehfest an der Welle angelegt, der vordere Abschnitt radial gegen die Hohlwelle vorgespannt und der hintere Abschnitt einer der Blattfedern ist entgegen einer relativen Drehrichtung der Hohlwelle gegen einen vorderen Abschnitt der einen der Blattfedern benachbarten Blattfeder vorgespannt. Die hinteren Abschnitte der Blattfedern stützten reihum den vorderen Abschnitt der benachbarten Blattfeder. Der Aufbau ist in sich mechanisch stabil und benötigt nur wenige Komponenten. Zusätzlich kann selbst bei Verwendung einfacher Blattfedern eine hohe Federkraft auf die Hohlwelle durch die parallele Nutzung von vorderen und hinteren Abschnitt erhalten werden. Hierdurch erhält man eine Drehmomentkupplung mit einem hohen Schwellwert für einen Leerlauf bei einem geringen Gewicht der Drehmomentkupplung.

Die erfindungsgemäße Drehmomentkupplung kann auch invertiert zu vorigem Aspekt aufgebaut sein. Die Drehmomentkupplung hat eine Welle, eine Hohlwelle und mehreren Blattfedern mit jeweils einem vorderen, mittleren und hinteren Abschnitt. Der mittlere Abschnitt ist drehfest an der Hohlwelle angelegt, der vordere Abschnitt radial gegen die Welle vorgespannt und der hintere Abschnitt einer der Blattfedern entgegen einer relativen Drehrichtung der Welle gegen einen vorderen Abschnitt der einen der Blattfedern benachbarten Blattfeder vorgespannt.

Eine Ausgestaltung sieht vor, dass der hintere Abschnitt den vorderen Abschnitt an einem Anlagepunkt berührt, der näher an der Hohlwelle als an der Welle ist. Die Abstützung des vorderen durch den hinteren Abschnitt erfolgt vorzugsweise möglichst nahe der Hohlwelle, um eine große Hebelwirkung zu erzielen.

In einer Ausgestaltung hat die Drehmomentkupplung einen Nabenkranz, an dem die mittleren Abschnitte der Blattfedern angelegt sind. Der Nabenkranz kann mehrere Stifte aufweisen und die mittleren Abschnitte der Blattfedern jeweils einen der Stifte umgreifen. Der mittlere Abschnitt der Blattfeder kann den Stift an einer der Welle zugewandten Seite des Stifts umgreifen. Die Blattfedern müssen nicht durch Nieten, Schrauben oder durch Löten, Schweißen befestigt werden. Sie umgreifen die Stifte, um eine Drehmoment aufzunehmen oder abzugeben. Das Klemmen der vorderen und hinteren Abschnitte bewirkt, dass die Blattfedern bereits nach dem Einlegen während der Montage fixiert sind.

Eine Ausgestaltung sieht vor, dass die Hohlwelle eine profilierte Innenfläche aufweist, gegen die der vordere Abschnitt der Blattfeder vorgespannt ist. Die profilierte Innenfläche kann zu der Welle vorspringende Erhebungen aufweisen. Die profilierte Innenfläche erhöht ein übertragbares Drehmoment.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: eine Drehmomentkupplung;
- Fig. 2: die Drehmomentkupplung von Fig. 1 in einer Seitenansicht;
- Fig. 3: eine weitere Drehmomentkupplung.

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

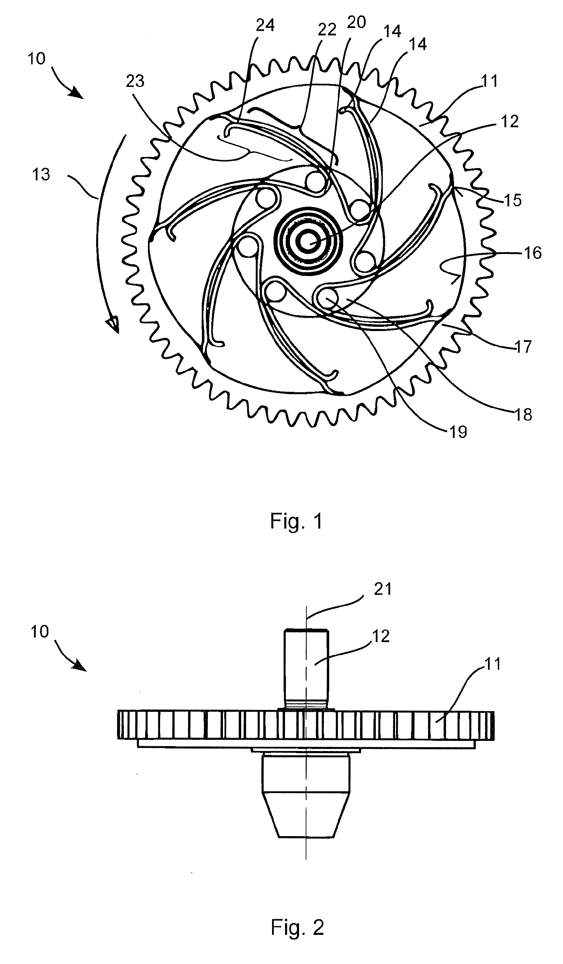

Fig. 1 zeigt eine Draufsicht auf eine beispielhafte Drehmomentkupplung 10; Fig. 2 zeigt eine zugehörige Seitenansicht. Die Drehmomentkupplung 10 weist eine Hohlwelle 11 und eine in der Hohlwelle 11 konzentrisch angeordnete Welle 12 auf. Die äußere Hohlwelle 11 ist beispielhaft als Zahnrad ausgebildet. Der Pfeil deutet die relative Drehrichtung 13 der Hohlwelle 11 gegenüber der Welle 12 im Betrieb an. Die Konstruktion der Drehmomentkupplung 10 erlaubt sowohl die Welle 12 als auch die Hohlwelle 11 als Antriebswelle und entsprechend die andere der beiden Wellen als Abtriebswelle zu verwenden.

Eine Kraftübertragung zwischen der Hohlwelle 11 und der Welle 12 erfolgt über mehrere Blattfedern 14. Die Blattfedern 14 sind drehfest an der Welle 12 angelegt. Kontaktflächen 15 der Blattfedern 14 liegen kraftschlüssig und/oder formschlüssig an einer Innenseite 16 der Hohlwelle 11 an. Der Kraftschluss kann durch Haftung der Blattfedern 14 an der Innenseite 16 gegeben sein. Zusätzlich kann die Innenseite 16 der Hohlwelle 11 mehrere Vorsprünge 17 aufweisen, die sich in radialer Richtung zu der Welle 12 erstrecken.

Bei einer Übertragung eines Drehmoments von der Welle 12 auf die Hohlwelle 11, oder umgekehrt, verbiegen sich die Blattfedern 14 entgegen der Drehrichtung 13 der Hohlwelle 11. Die Auslenkung der Blattfedern 14 ist unter Anderem durch das übertragende Drehmoment und die Federsteifigkeit der Blattfedern 14 bestimmt. Mit zunehmender Auslenkung sinkt die Haftung der Kontaktflächen 15 an der Innenseite 16 der Hohlwelle. Die Auslenkung bewirkt ferner, dass ein Formschluss zwischen den Kontaktflächen 15 und einer profilierten Innenseite 16 aufgehoben wird, wenn sich die Kontaktflächen 15 von der Innenseite 16 entfernen. Sobald die Haftung einen Schwellwert unterschreitet und der Formschluss aufgehoben ist, unterbricht die Drehmomentkupplung 10 eine Drehmomentübertragung zwischen Welle 12 und Hohlwelle 11. Die Federsteifigkeit der Blattfedern 14 wird geeignet gewählt, um ein Unterbrechen der Drehmomentübertragung für ein spezifiziertes Drehmoment zu erhalten.

Ein Anlegen der Blattfedern 14 an der Welle 12 erfolgt in der dargestellten Ausführungsform mittels eines Nabenkranzes 18. Der Nabenkranz 18 ist drehfest mit der Welle 12 verbunden. Der Nabenkranz 18 hat mehrere Stifte 19, die entlang seines Umfangs, vorzugsweise in gleichen Winkelabständen, angeordnet sind.

Ein mittlerer Abschnitt 20 der Blattfeder 14 ist um einen der Stifte 19 gebogen angeordnet. Der gebogene, mittlere Abschnitt 20 ist zwischen der Achse 21 der Welle 12 und dem Stift 19 angeordnet.

Ein vorderer Abschnitt 22 der Blattfeder 14 stützt sich an der Innenseite 16 der Hohlwelle 11 ab. Der vordere Abschnitt 22 bildet die Kontaktfläche 15 aus, welche die Innenseite 16 berührt. Alternativ ist der vordere Abschnitt 22 mit einem Aufsatz versehen, der den vorderen Abschnitt 22 bis zur Innenseite 16 verlängert oder den vorderen Abschnitt 22 im Bereich der Innenseite 16 ummantelt.

Ein hinterer Abschnitt 23 der Blattfeder 14 stützt sich an einem Anlagepunkt 24 an einem vorderen Abschnitt 22 einer entgegen der Drehrichtung 13 benachbarten Blattfeder 14 ab. Der vordere Abschnitt 22 und der hintere Abschnitt 23 sind vorzugsweise näherungsweise gleichlang. Der Anlagepunkt 24 liegt vorzugsweise näher an der Hohlwelle 11 als an der Welle 12 oder dem Nabenkranz 18. Der vordere Abschnitt einer Blattfeder 14 und der hintere Abschnitt ihrer benachbarten Blattfeder 14 drücken beide entgegen der Drehrichtung 13 und in radialer Richtung nach Außen die Kontaktfläche 15 gegen die Hohlwelle 11.

Der vorderer Abschnitt 22 oder der hintere Abschnitt 23 können gegen einen weiteren Stift 19 geklemmt sein. In der dargestellten Ausführungsform liegt der vordere Abschnitt 22 an dem Stift 19 an dessen von der Achse 21 abgewandten Seite an.

Die Blattfedern 14 können an den Stiften 19 durch eine reine Klemmwirkung angelegt sein. Alternativ weisen die Stifte 19 einen Schlitz auf, in den die Blattfedern 14 eingesetzt sind. In einer weiteren Variante ist der mittlere Abschnitt 20 der Blattfedern 14 an den Stiften 19 oder an dem Nabenkranz 18 materialschlüssig, z.B. durch Löten oder Schweißen, befestigt.

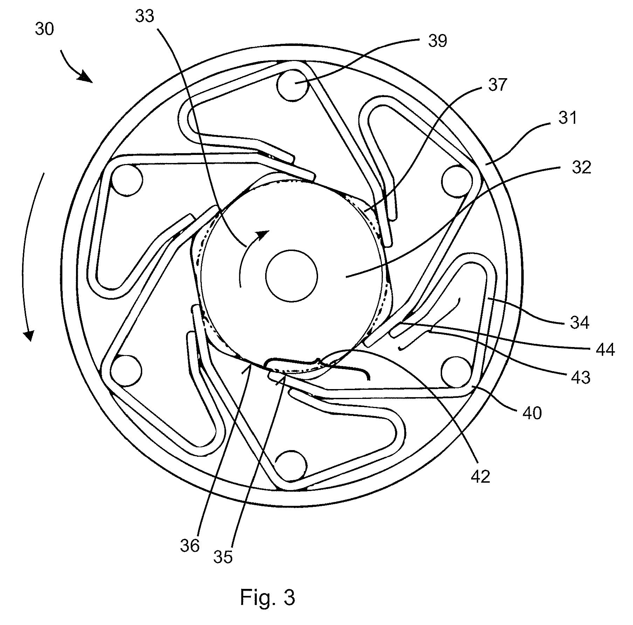

Fig. 3 zeigt eine weitere Ausführungsform einer Drehmomentkupplung 30. Die Drehmomentkupplung 30 unterscheidet sich von der Drehmomentkupplung 10 aus Fig. 1 in der Anlage von Blattfedern 34. Die Blattfedern 34 sind drehfest an einer Hohlwelle 31 angelegt und Kontaktflächen 35 der Blattfedern 34 liegen kraftschlüssig und/oder formschlüssig an einer Innenseite 36 einer Welle 32 an. Der Kraftschluss kann durch Haftung der Blattfedern 34 an der Außenseite 36 der Welle 32 gegeben sein. Zusätzlich kann die Außenseite 36 der Welle 32 mehrere Vorsprünge 37 aufweisen, die sich in radialer Richtung zu der Hohlwelle 31 erstrecken. Das Wirkprinzip zur Übertragung eines Drehmoments zwischen Hohlwelle 31 und Welle 32 ist gleich.

Das Anlegen der Blattfedern 34 an der Hohlwelle 31 erfolgt in der dargestellten Ausführungsform mittels mehrerer Stifte 39. Die Stifte 39 sind an der Hohlwelle 31 befestigt und vorzugsweise in gleichen Winkelabständen angeordnet. Ein mittlerer Abschnitt 40 der Blattfeder 34 ist um einen der Stifte 39 gebogen angeordnet. Der gebogene, mittlere Abschnitt 40 ist von einer Achse 41 der Welle 32 am weitesten entfernt. Vorzugsweise berührt der mittlere Abschnitt 40 eine Innenwandung der Hohlwelle 31. Ein vorderer Abschnitt 42 der Blattfeder 34 stützt sich an der Außenseite 36 der Welle 32 ab. Der vordere Abschnitt 42 bildet die Kontaktfläche 35 aus, welche die Außenseite 36 berührt.

Ein hinterer Abschnitt 43 der Blattfeder 34 stützt sich an einem Anlagepunkt 44 an einem vorderen Abschnitt 42 einer entgegen der Drehrichtung 33 der Welle 32 benachbarten Blattfeder 44 ab. Der Anlagepunkt 44 liegt vorzugsweise näher an der an der Welle 32 als an der Hohlwelle 31 oder den Stiften 39. Der vordere Abschnitt einer Blattfeder 34 und der hintere Abschnitt ihrer benachbarten Blattfeder 34 drücken beide entgegen der Drehrichtung 13 und in radialer Richtung nach Innen die Kontaktfläche 35 gegen die Welle 32.

Abwandlungen der Drehmomentkupplung 10 in der Gestaltung der Blattfedern 14 und deren Aufhängung können sinngemäß auf die Drehmomentkupplung 30 übertragen werden.

## Patentansprüche

1. Drehmomentkupplung mit einer Welle (12), einer Hohlwelle (11) und mehreren Blattfedern (14) mit einem vorderen (22), mittleren (20) und hinteren Abschnitt (23), wobei der mittlere Abschnitt (20) drehfest an der Welle (12) angelegt ist, der vordere Abschnitt (22) radial gegen die Hohlwelle (11) vorgespannt ist und der hintere Abschnitt (23) einer der Blattfedern (14) entgegen einer relativen Drehrichtung (13) der Hohlwelle (11) gegen einen vorderen Abschnitt (22) der einen der Blattfedern (14) benachbarten Blattfeder (14) vorgespannt ist.

2. Drehmomentkupplung nach Anspruch 1, **dadurch gekennzeichnet, dass** der hintere Abschnitt (23) den vorderen Abschnitt (22) an einem Anlagepunkt (24) berührt, der näher an der Hohlwelle (11) als an der Welle (12) ist.

3. Drehmomentkupplung nach Anspruch 1 oder 2, **gekennzeichnet durch** einen Nabenkranz (18), an dem die mittleren Abschnitte (20) der Blattfedern (14) angelegt sind.

4. Drehmomentkupplung nach Anspruch 3, **dadurch gekennzeichnet, dass** der Nabenkranz (18) mehrere Stifte (19) aufweist und die mittleren Abschnitte der Blattfedern (14) jeweils einen der Stifte (19) umgreifen.

5. Drehmomentkupplung nach Anspruch 4, **dadurch gekennzeichnet, dass** der mittlere Abschnitt der Blattfeder (20) den Stift (19) an einer der Welle (12) zugewandten Seite des Stifts (19) umgreift.

6. Drehmomentkupplung nach einem der vorhergehenden Ansprüche, **dadurch gekennzeichnet, dass** die Hohlwelle (11) eine profilierte Innenfläche (16) aufweist, gegen die der vordere Abschnitt (22) der Blattfeder (14) vorgespannt ist.

7. Drehmomentkupplung nach Anspruch 6, **dadurch gekennzeichnet, dass** die profilierte Innenfläche (16) zu der Welle (12) vorspringende Erhebungen (17) aufweist.

8. Drehmomentkupplung mit einer Welle (32), einer Hohlwelle (31) und mehreren Blattfedern (34) mit einem vorderen (42), mittleren (40) und hinteren Abschnitt (43), wobei der mittlere Abschnitt (40) drehfest an der Hohlwelle (31) angelegt ist, der vordere Abschnitt (42) radial gegen die Welle (32) vorgespannt ist und der hintere Abschnitt (43) einer der Blattfedern (34) entgegen einer relativen Drehrichtung (33) der Welle (31) gegen einen vorderen Abschnitt (42) der einen der Blattfedern (34) benachbarten Blattfeder (34) vorgespannt ist.

9. Drehmomentkupplung nach Anspruch 8, **dadurch gekennzeichnet, dass** der hintere Abschnitt (43) den vorderen Abschnitt (42) an einem Anlagepunkt (44) berührt, der näher an der Welle (32) als an der Hohlwelle (31) ist.

10. Drehmomentkupplung nach Anspruch 9, **dadurch gekennzeichnet, dass** die Hohlwelle (31) mehrere Stifte (39) aufweist und die mittleren Abschnitte der Blattfedern (34) jeweils einen der Stifte (39) umgreifen.

11. Drehmomentkupplung nach Anspruch 10, **dadurch gekennzeichnet, dass** der mittlere Abschnitt der Blattfeder (20) den Stift (19) an einer der Hohlwelle (31) zugewandten Seite des Stifts (39) umgreift.

12. Drehmomentkupplung nach einem der vorhergehenden Ansprüche 8 bis 11, **dadurch gekennzeichnet, dass** die Welle (32) eine profilierte Außenfläche (36) aufweist, gegen die der vordere Abschnitt (42) der Blattfeder (34) vorgespannt ist.

13. Drehmomentkupplung nach Anspruch 12, **dadurch gekennzeichnet, dass** die profilierte Außenfläche (36) zu der Hohlwelle (31) vorspringende Erhebungen (37) aufweist.
